# EUROPÄISCHE PATENTSCHRIFT

(11) **EP 1 110 686 B1**
(45) Veröffentlichungstag und Bekanntmachung des Hinweises auf die Patenterteilung: **29.12.2004**
(21) Anmeldenummer: 00890338.7
(22) Anmeldetag: 13.11.2000
(51) Int. Cl.: B26F 3/00, C03B 33/03

(54) **Verfahren und Vorrichtung zum Schneiden von Glasscheiben mit Hilfe eines Wasserstrahls**
Process and apparatus for cutting glass sheets using a water jet
Procédé et dispositif pour couper des feuilles de verre avec un jet d eau

(30) Priorität: 23.12.1999 AT 217899
(43) Veröffentlichungstag der Anmeldung: 27.06.2001
(73) Patentinhaber: Tecnopat AG, 9008 St. Gallen (CH)
(72) Erfinder: Lisec, Peter, 3363 Amstetten-Hausmening (AT)
(74) Vertreter: Beer, Manfred, Dipl.-Ing.

(56) Entgegenhaltungen:
- EP-A- 0 207 069
- JP-A- 51 142 186
- US-A- 5 111 652

## Beschreibung

Die Erfindung betrifft ein Verfahren sowie eine Vorrichtung zum Schneiden von Glasscheiben mit Hilfe eines auf die Glasscheibe gerichteten, unter Druck stehenden Wasserstrahls, dem gegebenenfalls ein abrasiver Stoff zugesetzt ist, nach dem Oberbegriff der Ansprüche 1 und 8. Ein derartiges Verfahren und eine derartige Vorrichtung sind aus dem Dokument EP 207069 A bekannt.

Es ist bekannt, Glasscheiben mit Hilfe eines Wasserstrahls zu schneiden, der mit einem Druck von etwa 3000 bar aus einer Düse auf die zu schneidende Glasscheibe gerichtet wird. Das bekannte Schneiden von Glasscheiben mit einem Wasserstrahl wird mit horizontal angeordneten Glasscheiben ausgeführt, wobei unterhalb der Glasscheibe ein Wasserbett vorgesehen ist, dessen Oberfläche mit Abstand unter der Glasscheibe angeordnet ist. In dem Wasserbett sind über die Wasseroberfläche überstehende Auflager vorgesehen, auf welchen die Glasscheibe aufliegt. Beim bekannten Schneiden von Glasscheiben wird der Wasserstrahl bei stillstehender Glasscheibe entlang der vorgegebenen Teilungskontur bewegt.

Problematisch bei dem bekannten Verfahren ist es, daß der Wasserstrahl unweigerlich dann und wann auf Auflager trifft, von diesen zurückprallt und so durch den Wasserstrahl und dem in diesem enthaltenen, abrasiven Stoff die Unterseite der Glasscheibe beschädigt wird, mit dem Ergebnis, daß im Glas mattierte Stellen vorliegen.

Zur Lösung dieses Problems ist auch schon vorgeschlagen worden, zwischen Glasscheibe und Auflager eine Schaumstofflage einzulegen. Diese Lösung ist insoferne problematisch, als die Schaumstofflage jedesmal erneuert werden muß und unter der Wirkung des Wasserstrahls zerbröselt, also in kleine Teile zerteilt wird, so daß sich erhebliche Verschmutzungsprobleme ergeben.

Auch ist es bei dem bekannten Verfahren zum Schneiden von Glasscheiben mit einem Wasserstrahl problematisch, daß Wasser, wenn der Wasserstrahl auf ein Auflager trifft, unkontrolliert zerstäubt und weiters, daß sich erheblicher Lärm entwickelt.

Der Erfindung liegt die Aufgabe zugrunde, ein Verfahren zum Schneiden von Glasscheiben mit einem Wasserstrahl zu schaffen, welches die vorgenannten Probleme löst, und das insbesondere ohne die bekannte Schaumstoff läge ausgeführt werden kann.

Erfindungsgemäß wird diese Aufgabe mit einem Verfahren mit den Merkmalen des Anspruches 1 und mit einer Vorrichtung mit dem Merkmalen des Anspruchs 8 gelöst.

Bevorzugte und vorteilhafte Ausgestaltungen der Erfindung sind Gegenstand der vom Verfahrenshauptanspruch abhängigen Unteransprüche.

Die Erfindung erstreckt sich auch auf eine Vorrichtung zum Durchführen des erfindungsgemäßen Verfahrens, welche Vorrichtung durch die Merkmale des Vorrichtungshauptanspruches 8 gekennzeichnet ist.

Bevorzugte und vorteilhafte Ausgestaltungen der erfindungsgemäßen Vorrichtung sind Gegenstand der vom Vorrichtungshauptanspruch abhängigen Unteransprüche.

Bei dem erfindungsgemäßen Verfahren ist jedenfalls ausgeschlossen, daß der Wasserstrahl, mit dem die Glasscheibe geschnitten wird, (starre) Auflager trifft, da der die Glasscheibe schneidende Wasserstrahl auf der Rückseite (= die der Einwirkseite des Wasserstrahls gegenüberliegende Seite) der Glasscheibe durch den auf die Rückseite der Glasscheibe gerichteten Wasserschwall aufgefangen wird. Dadurch sind unerwünschte Rückprallerscheinungen und die dadurch entstehenden, mattierten Stellen der Glasscheibe mit Sicherheit vermieden. Des weiteren ergibt das erfindungsgemäße Verfahren den Vorteil, daß die Lärmentwicklung beim Schneiden von Glasscheiben mit einem Wasserstrahl erheblich vermindert ist. Das erfindungsgemäße Verfahren bietet auch den Vorteil, daß die bei den bekannten Verfahren zum Schneiden von Glasscheiben mit einem Wasserstrahl erforderlichen Wasserbetten entbehrlich sind, so daß der apparative und betriebstechnische Aufwand in Grenzen gehalten wird.

Bevorzugt wird das erfindungsgemäße Verfahren bei annähernd lotrecht ausgerichteten Glasscheiben ausgeführt.

Die nachstehende Beschreibung ergibt ein Beispiel des Verfahrens der Erfindung mit Bezug auf eine beispielsweise Ausführungsform einer erfindungsgemäßen zum Durchführen des Verfahrens der Erfindung geeigneten Vorrichtung an Hand der Zeichnungen. Es zeigt:
Fig. 1 schematisch und in Vorderansicht eine Vorrichtung zum Schneiden von Glasscheiben mit einem Wasserstrahl und
Fig. 2 eine Seitenansicht hiezu.

Die erfindungsgemäße Vorrichtung umfaßt eine als Gleitfläche ausgebildete Stützwand 1 (beispielsweise ein Rollenfeld, Walzenfeld oder eine Luftkissen-Stützwand), die im wesentlichen lotrecht ausgerichtet ist, und vorzugsweise um wenige Grad, beispielsweise um 5°, nach hinten geneigt ist, so daß sich eine auf eine Fördereinrichtung 2 (beispielsweise einem Rollenförderer) am unteren Rand der Stützwand 1 aufstehende Glasscheibe 3 gegen die Stützwand 1 lehnt. In der Stützwand 1 ist eine lotrechte schlitzförmige Unterbrechung 4 (Spalt) vorgesehen, die bevorzugt über die gesamte Höhe der Stützwand 1 durchgeht.

Vor der Stützwand 1 ist eine Führungsschiene 5 vorgesehen, an der ein Schlitten 6 auf- und abverstellbar geführt ist, der eine Wasserstrahldüse 7 trägt. Für das Bewegen des Schlittens 6 und damit der Wasserstrahldüse 7 entlang der Führungsschiene 5, also im wesentlichen lotrecht nach oben und nach unten, sind an sich bekannte Antriebe für den Schlitten 6, wie beispielsweise ein Zahnriemenantrieb, ein Spindel-, Spindelmutter-Antrieb oder ein Zahnstangen-Ritzel-Antrieb vorgesehen (nicht gezeigt).

Hinter der Stützwand 1 ist ebenfalls eine Führungsschiene 10 vorgesehen, an der ein Schlitten 11 auf- und abverschiebbar geführt ist. Auch für das Verstellen dieses Schlittens 11 ist ein Antrieb, beispielsweise einer der zuvor genannten Antriebe, vorgesehen.

Der Schlitten 11 trägt eine hohl ausgebildete Kammer 12 mit einer auf die schlitzförmige Unterbrechung 4 in der Stützwand 1 gerichteten Öffnung 13. An die hohle Kammer 12 ist eine Leitung 14 angeschlossen, durch die aus einem Waserbehälter 15 mit Hilfe einer Pumpe 16, gegebenenfalls über ein Filter 17, Wasser in die Kammer 12 geleitet wird, das aus der Öffnung 13 der Kammer 12 schwallartig austritt.

Die Antriebe des Schlittens 6 für die Wasserstrahldüse 7 einerseits und des Schlittens 11 für die hohle Kammer 12 anderseits sind miteinander synchronisiert, so daß sich die Schlitten 6 und 11 synchron entlang ihrer Führungsschienen 5 und 10 auf und ab bewegen, und die Öffnung 13 in der hohlen Kammer 12 stets der Wasserstrahldüse 7 gegenüberliegend ausgerichtet ist. So ist die Wasserstrahldüse 7 von vorne auf die Glasscheibe 3 gerichtet und die Öffnung 13 der hohlen Kammer 12 ist stets konzentrisch zur Achse der Wasserstrahldüse 7 auf der anderen Seite (der Rückseite) der Glasscheibe 3 angeordnet.

Um die Synchronisierung der Bewegungen von Wasserstrahldüse 7 und Kammer 12 zu vereinfachen, können die Antriebe für die Schlitten 6 und 11 mit einem gemeinsamen Antriebsmotor gekuppelt sein.

Die Fördereinrichtung 2 am unteren Rand der Stützwand 1 ist im Beispiel als Rollenbahn ausgerichtet, und mit einem Antrieb gekuppelt. Die Fördereinrichtung 2 kann auch ein (Zahn-) Riemenförderer sein.

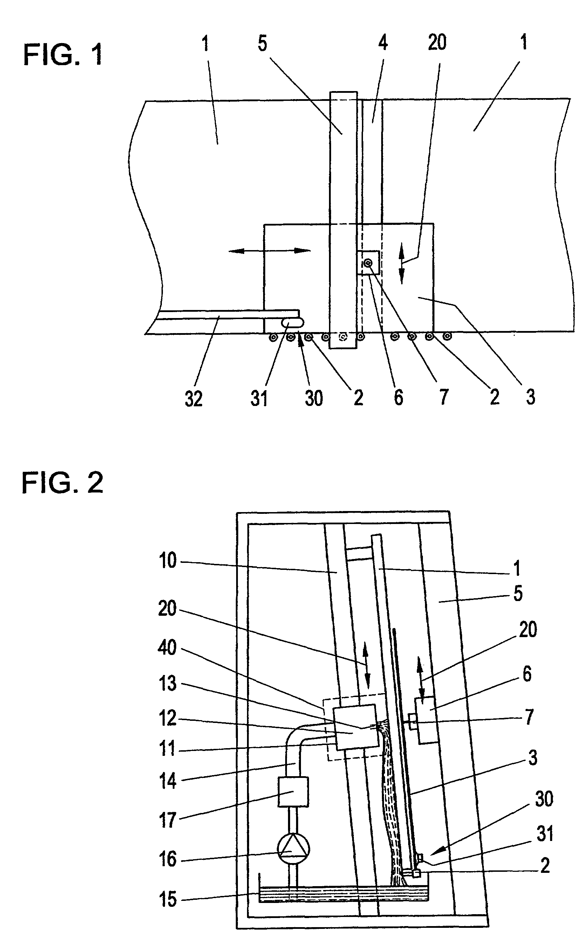

Beim Schneiden einer Glasscheibe 3 wird die Wasserstrahldüse 7 und die hohle Kammer 12 mit der Öffnung 13 für den auf die Rückseite der Glasscheibe 3 gerichteten Wasserschwall gleichzeitig mit dieser und synchron auf und ab bewegt, wie dies durch die Pfeile 20 in Fig. 1 und 2 veranschaulicht ist. Wenn in der Glasscheibe 3 von der lotrechten Richtung abweichende Schnitte zu erzeugen sind, wird diese mit Hilfe der Fördereinrichtung 2 horizontal entlang der Stützwand 1 bewegt. Auch kombinierte Bewegungen der Wasserstrahldüse 7 und der Glasscheibe 3 können ausgeführt werden, um nach beliebigen Teilungskonturen schneiden zu können.

Um ein sicheres kontrolliertes und genaues Bewegen der Glasscheibe 3 zu gewährleisten, kann oberhalb der Fördereinrichtung 2 eine, vorzugsweise auf der Vorderseite, der Glasscheibe 3 angreifende Mitnahmeeinrichtung 30 (Schleppeinrichtung) vorgesehen sein. In einer einfachen Ausführungsform ist diese Mitnahmeeinrichtung 30 mit einem mit Unterdruck beaufschlagten, entlang einer Führungsschiene 32 verstellbaren Saugkopf 31 ausgestattet, der an die Glasscheibe 3 angelegt wird und für einen sicheren und genauen Transport der Glasscheibe 3 in horizontaler Richtung entlang der Stützwand 1 sorgt.

Der Behälter 15, aus dem Wasser zu der hohlen Kammer 12 geleitet wird, kann gleichzeitig als Auffangwanne für aus der Wasserstrahldüse 7 austretendes Wasser dienen und ist daher bevorzugt so angeordnet, daß von der Einwirkstelle des aus der Düse 7 austsretenden Wasserstrahls nach unten rinnendes Wasser und aus der Öffnung 13 der hohlen Kammer 12 austretendes Wasser, von dem als nach oben offene Wanne ausgebildeten Behälter 15 aufgefangen wird.

Der Druck, mit dem die hohle Kammer 12 mit Wasser beaufschlagt wird, ist so bemessen, daß aus ihrer Öffnung 13 schwallartig austretendes Wasser die Rückseite der Glasscheibe 3 an einer Stelle berührt, die der Einwirkstelle des aus der Wasserstrahldüse 7 austretenden Wasserstrahls gegenüberliegt. Dadurch wird wirksam verhindert, daß der aus der Wasserstrahldüse 7 austretende Wasserstrahl nach seinem Durchtritt durch die Glasscheibe 3 auf einen harten Widerstand trifft (aufprallt), sondern vielmehr vom Wasserschwall gedämpft aufgefangen wird und daher nicht zerstäubt. So sind einerseits Beschädigungen der Rückseite der Glasscheibe 3 verhindert und die Geräuschentwicklung beim Betrieb der erfindungsgemäßen Vorrichtung zum Schneiden von Glasscheiben nach dem Verfahren der Erfindung wird in Grenzen gehalten.

Zusätzlich kann die Geräuschentwicklung noch beschränkt werden, wenn die hohle Kammer 12 in einem Gehäuse 40 (strichliert in Fig. 2 angedeutet) aus schalldämmendem Werkstoff untergebracht ist, wobei die Wände des Gehäuses 40 bis in unmittelbare Nähe der Rückseite der Glasscheibe 3 ragen und lediglich ihre untere Wand des Gehäuses 40 einen Abstand von der Glasscheibe 3 aufweist, um das Abströmen von Wasser in die Auffangwanne 15 zu erlauben.

Von erheblichem Vorteil bei dem Verfahren und der Vorrichtung zum Schneiden von Glasscheiben 3 mit einem Wasserstrahl, wie es zuvor beschrieben worden ist, ist es, daß der die Glasscheibe 3 zerschneidende Wasserstrahl nach seinem Durchtritt durch die Glasscheibe 3 von dem auf die Rückseite der Glasscheibe 3 gerichteten Wasserschwall so aufgefangen wird, daß ein Rückprall des mit abrasivem Stoff versetzten Wassers auf die Glasscheibe 3 zuverlässig verhindert ist.

Zusammenfassend kann ein bevorzugtes Beispiel der Erfindung wie folgt beschrieben werden:

Beim Schneiden einer Glasscheibe 3 mit einem Wasserstrahl, der aus einer Düse 7 mit hohem Druck gegen die Glasscheibe 3 gerichtet wird, wird auf die Glasscheibe 3 auf der der Einwirkstelle des schneidenden Wasserstrahls gegenüberliegenden Seite ein Schwall aus Wasser an eine Stelle gerichtet, die der Düse 7 gegenüberliegt. Durch den Schwall aus Wasser wird der die Glasscheibe 3 schneidende Wasserstrahl dämpfend aufgefangen, ohne daß er zerstäubt und auf die Rückseite der Glasscheibe 3 zurückprallt.

## Patentansprüche

1. Verfahren zum Schneiden einer Glasscheibe (3) mit einem Wasserstrahl, wobei dem Wasserstrahl gegebenenfalls abrasiver Stoff zugesetzt ist, und der Wasserstrahl auf die zu schneidende Glasscheibe (3) gerichtet wird, **dadurch gekennzeichnet, daß** auf die Seite der Glasscheibe (3), die der Seite derselben, auf die der schneidende Wasserstrahl gerichtet wird, gegenüberliegt, ein Wasserschwall gerichtet wird, der die Glasscheibe (3) an einer Stelle berührt, die der Einwirkstelle des schneidenden Wasserstrahls auf die Glasscheibe (3) gegenüberliegt.

2. Verfahren nach Anspruch 1, **dadurch gekennzeichnet, daß** die zu schneidende Glasscheibe (3) im wesentlichen lotrecht ausgerichtet wird.

3. Verfahren nach Anspruch 1 oder 2, **dadurch gekennzeichnet, daß** zwischen der zu schneidenden Glasscheibe (3) einerseits und dem Wasserschwall sowie dem die Glasscheibe (3) schneidenden Wasserstrahl anderseits eine der Teilungskontur entsprechende Relativbewegung ausgeführt wird.

4. Verfahren nach einem der Ansprüche 1 bis 3, **dadurch gekennzeichnet, daß** der die Glasscheibe (3) schneidende Wasserstrahl und der auf die Glasscheibe (3) gerichtete Wasserschwall beim Ausführen der Schneidarbeit in einer ersten Richtung und die Glasscheibe (3) in einer zweiten, zur ersten Richtung senkrecht stehenden Richtung bewegt werden.

5. Verfahren nach Anspruch 4, **dadurch gekennzeichnet, daß** der die Glasscheibe (3) schneidende Wasserstrahl und der auf die Glasscheibe (3) gerichtete Wasserschwall in einer lotrechten Ebene und die Glasscheibe (3) horizontal bewegt werden.

6. Verfahren nach einem der Ansprüche 1 bis 5, **dadurch gekennzeichnet, daß** von der Schneidstelle nach unten rinnendes Wasser des Wasserstrahls und des Wasserschwalls aufgefangen und zur Bildung des Wasserschwalls verwendet wird.

7. Verfahren nach Anspruch 6, **dadurch gekennzeichnet, daß** das zur Bildung des Wasserschwalls verwendete Wasser gefiltert wird, um abrasiven Stoff zu entfernen.

8. Vorrichtung zum Durchführen des Verfahrens nach einem der Ansprüche 1 bis 7, mit einer Düse (7) für das Erzeugen des die Glasscheibe (3) schneidenden Wasserstrahls, mit einer Einrichtung zum Zuführen von unter Druck stehendem Wasser zur Düse (7) und mit einer Einrichtung zum Erzeugen einer Relativbewegung zwischen der Düse (7) und der zu schneidenden Glasscheibe (3), **dadurch gekennzeichnet, daß** eine als Gleitfläche ausgebildete Stützwand (1) mit einer am unteren Rand der Stützwand (1) vorgesehenen Fördereinrichtung (2) für die Glasscheibe (3) vorgesehen ist, daß die Düse (7) an einem Schlitten (6) auf einer Führung (5) entlang der Stützwand (1) verschiebbar ist, daß in der Stützwand (1) der Düse (7) gegenüberliegend eine Unterbrechung (4) in Form eines parallel zur Führung (5) in einer lotrechten Ebene ausgerichteten Schlitzes vorgesehen ist, daß der der Düse (7) gegenüberliegenden Seite der Glasscheibe (3) eine Kammer (12) mit einer der Düse (7) gegenüberliegenden Öffnung (13) für den Austritt eines Wasserschwalls zugeordnet ist und daß die Kammer (12) synchron mit der Düse (7) verschiebbar ist.

9. Vorrichtung nach Anspruch 8, **dadurch gekennzeichnet, daß** die Düse (7) an einem Schlitten (6) angeordnet ist, daß der Schlitten (6) entlang einer Führungsschiene (5) verstellbar ist und daß die Führungsschiene (5) parallel zur Stützwand (1) und zur Unterbrechung (4) in dieser ausgerichtet ist.

10. Vorrichtung nach Anspruch 8 oder 9, **dadurch gekennzeichnet, daß** die Kammer (12) an einem Schlitten (11) angeordnet ist, daß der Schlitten (11) entlang einer Führungsschiene (10) verstellbar ist und daß die Führungsschiene (10) parallel zur Stützwand (1) und zur Unterbrechung (4) in dieser ausgerichtet ist.

11. Vorrichtung nach Anspruch 9 und 10, **dadurch gekennzeichnet, daß** den Schlitten (6, 11) für die Düse (7) und die hohle Kammer (12) Verstelleinrichtungen zugeordnet sind.

12. Vorrichtung nach Anspruch 11, **dadurch gekennzeichnet, daß** die Verstelleinrichtungen für die Schlitten (6 und 11) mit einem gemeinsamen Antriebsmotor gekuppelt sind.

13. Vorrichtung nach einem der Ansprüche 8 bis 12, **dadurch gekennzeichnet, daß** die Stützwand (1) um wenige Grad, vorzugsweise um 5°, nach hinten geneigt ist.

14. Vorrichtung nach Anspruch 13, **dadurch gekennzeichnet, daß** die Unterbrechung (4) als über im wesentlichen die gesamte Höhe der Stützwand (1) durchgehender, in einer lotrechten Ebene ausgerichteter Schlitz ausgebildet ist.

15. Vorrichtung nach einem der Ansprüche 9 bis 14, **dadurch gekennzeichnet, daß** die Führungsschienen (5 und 10) nach lotrechten Ebenen ausgerichtet sind.

16. Vorrichtung nach einem der Ansprüche 8 bis 15, **dadurch gekennzeichnet, daß** der Fördereinrichtung (2) für das Bewegen der Glasscheibe (3) entlang der Stützwand (1) eine Schleppeinrichtung (30), die an der Glasscheibe (3) angreift, zugeordnet ist.

17. Vorrichtung nach Anspruch 16, **dadurch gekennzeichnet, daß** die Schleppeinrichtung (30) wenigstens einen mit Unterdruck beaufschlagten, an die Glasscheibe (3) anlegbaren Saugkopf (31) aufweist.

18. Vorrichtung nach einem der Ansprüche 8 bis 17, **dadurch gekennzeichnet, daß** unterhalb der Stützwand (1) ein als nach oben offene Wanne ausgebildeter Behälter (15) angeordnet ist.

19. Vorrichtung nach Anspruch 18, **dadurch gekennzeichnet, daß** an die Kammer (12) eine mit Wasser beaufschlagte Leitung (14) angeschlossen ist.

20. Vorrichtung nach Anspruch 19, **dadurch gekennzeichnet, daß** die Leitung (14) von dem Behälter (15) ausgeht.

21. Vorrichtung nach Anspruch 19 oder 20, **dadurch gekennzeichnet, daß** in der Leitung (14) ein Filter (17) angeordnet ist.

22. Vorrichtung nach einem der Ansprüche 8 bis 21, **dadurch gekennzeichnet, daß** die Kammer (12) mit einem Gehäuse (40) aus schalldämmendem Werkstoff umgeben ist.

23. Vorrichtung nach Anspruch 22, **dadurch gekennzeichnet, daß** die im wesentlichen senkrecht zur Glasscheibe (3) stehenden Wände des Gehäuses (40) mit Ausnahme der unteren Wand bis unmittelbar an die Glasscheibe (3) reichen.

## Claims

1. Process for cutting a glass pane with a water jet, an abrasive material being optionally added to the water jet and the water jet being pointed at the glass pane to be cut, **characterized in that** a water surge is directed to the side of the glass pane which is opposite the side therof at which the cutting water jet is directed which water surge touches the glass pane at a site which is opposite the action side of the cutting water jet on the glass pane.

2. Process as claimed in claim 1, wherin the glass pane to be cut is aligned essentially vertically.

3. Process as claimed in claim 1 or 2, wherein between the glass pane to be cut on the one hand and the water surge and the water jet which cuts the glass pane on the other relative motion which corresponds to the cutting outline is executed.

4. Process as claimed in one of claims 1 to 3, wherein the water jet which cuts the glass pane and the water surge which is directed at the glass pane in the course of cutting are moved in a first direction and the glass pane is moved in a second direction which is perpendicular to the first direction.

5. Process as claimed in claim 4, wherein the water jet which cuts the glass pane and the water surge which is directed at the glass pane are moved in a vertical plane and the glass pane is moved horizontally.

6. Process as claimed in one of claims 1 to 5, wherein the water of the water jet and of the water surge running down from the cutting site is collected and used to form the water surge.

7. Process as claimed in claim 6, wherein the water used to form the water surge is filtered to remove abrasive material.

8. Device for exectuing the process as claimed in one of claims 1 to 7, with a nozzle (7) for producing the water jet which cuts the glass pane (3), with a means for feeding pressurized water to the nozzle (7) and with a means for producing relative motion between the nozzle (7) and the glass pane (3) to be cut, **characterized in that** a support wall (1) which is made as a sliding surface is provided with a conveyer means (2) which is provided on the lower edge of the support wall (1) for the glass pane (3), that the nozzle (7) can be moved on a carriage (6) on a guide (5) along the support wall (1), that in the support wall (1) opposite the nozzle (7) there is an interruption (4) in the form of a slot which is aligned parallel to the guide (5) in a vertical plane, that a chamber (12) with an opening (13) opposite the nozzle (7) for emergence of a water surge is assigned to the side of the glass pane (3) opposite the nozzle (7) and that the chamber (12) can be moved synchronously with the nozzle (7).

9. Device as claimed in claim 8, wherein the nozzle (7) is located on a carriage (6), wherein the carriage (6) can be adjusted along a guide rail (5) and wherein the guide rail (5) is aligned parallel to the support wall (1) and to the interruption (4) in it.

10. Device as claimed in claim 8 or 9, wherein the chamber (12) is located on a carriage (11), wherein the carriage (11) can be adjusted along the guide rail (10) and wherein the guide rail (10) is aligned parallel to the support wall (1) and to the interruption (4) in it.

11. Device as claimed in claim 9 and 10, wherein movement means are assigned to the carriages (6, 11) for the nozzle (7) and the hollow chamber (12).

12. Device as claimed in claim 11, wherein the movement means for the carriages (6 and 11) are coupled to a common drive motor.

13. Device as claimed in one of claims 8 to 12, wherein the support wall (1) is titled to the rear by a few degrees, preferably by 5°.

14. Device as claimed in claim 13, wherein the interruption (4) is made as a slot which is aligned in the vertical plane and which passes essentially the entire height of the support wall (1).

15. Device as claimed in one of claims 9 to 14, wherein the guide rails (5 and 10) are aligned according to vertical planes.

16. Device as claimed in one of claims 8 to 15, wherein a tugging means (30) which engages the glass pane (3) is assigned to the conveyer means (2) for moving the glass pane (3) along the support wall (1).

17. Device as claimed in claim 16, wherein the tugging means (30) has at least one vacuum-pressurized suction head (31) which can be placed against the glass pane (3).

18. Device as claimed in one of claims 8 to 17, wherein underneath the support wall (1) is a tank (15) which is made as a through which is open to the top.

19. Device as claimed in claim 18, wherein a line (14) which is supplied with water is connected to the chamber (12).

20. Device as claimed in claim 19, wherein the line (14) proceeds from the tank (15).

21. Device as claimed in claim 19 or 20, wherein there is a filter (17) in the line (14).

22. Device as claimed in one of claims 8 to 21, wherein the chamber (12) is surrounded with a housing (40) of noisedamping material.

23. Device as claimed in claim 22, wherein the walls of the housing (40) which are essentially perpendicular to the glass pane (3) except for the lower wall extend directly to the glass pane (3).

## Revendications

1. Procédé de coupe d'une vitre au moyen d'un jet d'eau, auquel une matière abrasive est ajoutée le cas échéant, le jet d'eau étant dirigé sur la vitre à couper, **caractérisé en ce qu'**un flot d'eau est dirigé sur la face de la vitre qui est opposée à la face sur laquelle est dirigé le jet d'eau coupant, flot d'eau qui touche la vitre à un endroit opposé à l'endroit d'action du jet d'eau coupant.

2. Procédé selon la revendication 1, **caractérisé en ce que** la vitre à couper est alignée essentiellement perpendiculairement.

3. Procédé selon la revendication 1 ou 2, **caractérisé en ce qu'**un mouvement relatif correspondant au contour de partage est effectué entre la vitre à couper et le flot d'eau d'une part, ainsi que le jet d'eau coupant la vitre d'autre part.

4. Procédé selon l'une des revendications 1 à 3, **caractérisé en ce que**, pendant le travail de coupe, le jet d'eau coupant la vitre et le flot d'eau dirigé sur la vitre sont déplacés dans une première direction, et **en ce que** la vitre est déplacée dans une seconde direction qui est perpendiculaire à la première direction.

5. Procédé selon la revendication 4, **caractérisé en ce que** le jet d'eau coupant la vitre et le flot d'eau dirigé sur la vitre sont déplacés sur un plan perpendiculaire, et **en ce que** la vitre est déplacé horizontalement.

6. Procédé selon l'une des revendications 1 à 5, **caractérisé en ce que** de l'eau du jet d'eau et du flot d'eau s'écoulant vers le bas depuis l'endroit de coupe, est captée et utilisée pour produire le flot d'eau.

7. Procédé selon la revendication 6, **caractérisé en ce que** l'eau utilisée pour produire le flot d'eau est filtrée afin d'en éliminer les matières abrasives.

8. Dispositif d'exécution du procédé selon l'une des revendications 1 à 7, avec une buse (7) servant à la production du jet d'eau coupant la vitre (3), avec un mécanisme permettant d'apporter de l'eau sous pression à la buse (7) et avec un mécanisme permettant de produire un mouvement relatif entre la buse (7) et la vitre (3) à couper, **caractérisé en ce qu'**est prévue une paroi d'appui (1), conçue comme surface de glissement, qui comporte sur son bord inférieur un dispositif transporteur (2) pour la vitre (3), que la buse (7) est déplaçable au moyen d'un chariot (6) sur un élément de guidage (5) le long de la paroi d'appui (1), qu'une interruption (4) sous forme de fente alignée parallèlement à l'élément de guidage (5) sur un plan perpendiculaire et opposée à la buse (7), est pratiquée dans la paroi d'appui (1), qu'une chambre (12) comportant, face à la buse (7), une ouverture (13) qui est destinée à la sortie d'un flot d'eau, est associée à la face de la vitre (3) qui est opposée à la buse (7), et **en ce que** la chambre (12) est déplaçable de manière synchrone avec la buse (7).

9. Dispositif selon la revendication 8, **caractérisé en ce que** la buse (7) est disposée sur un chariot (6), que le chariot (6) est réglable le long d'un rail de guidage (5) et que le rail de guidage (5) est orienté parallèlement à la paroi d'appui (1) et en tant qu'interruption dans celle-ci.

10. Dispositif selon les revendications 8 ou 9, **caractérisé en ce que** la chambre (12) est disposée sur un chariot (11), que le chariot (11) est réglable le long d'un rail de guidage (10) et que le rail de guidage (10) est aligné parallèlement à la paroi d'appui (1) et en tant qu'interruption (4) dans celle-ci.

11. Dispositif selon les revendications 9 et 10, **caractérisé en ce que** des dispositifs de réglage sont associés aux chariots (6, 11) pour la buse (7) et la chambre creuse (12).

12. Dispositif selon la revendication 11, **caractérisé en ce que** les dispositifs de réglage pour les chariots (6 et 11) sont couplés à un moteur d'entraînement commun.

13. Dispositif selon l'une des revendications 8 à 12, **caractérisé en ce que** la paroi d'appui (1) est inclinée de quelques degrés, de préférence de 5°, vers l'arrière.

14. Dispositif selon la revendication 13, **caractérisé en ce que** l'interruption (4) est conçue comme une fente qui s'étend essentiellement sur toute la hauteur de la paroi d'appui ( 1) et qui est alignée sur un plan perpendiculaire.

15. Dispositif selon l'une des revendications 9 à 14, **caractérisé en ce que** les rails de guidage (5 et 10) sont alignés sur des plans perpendiculaires.

16. Dispositif selon l'une des revendications 8 à 15, **caractérisé en ce qu'**une installation de remorquage (30) appliquée à la vitre (3) est associée au dispositif transporteur (2) pour le déplacement de la vitre (3) le long de la paroi d'appui (1).

17. Dispositif selon la revendication 16, **caractérisé en ce que** l'installation de remorquage (30) présente au moins une tête aspirante (31) se trouvant sous vide partiel et pouvant être mise en appui contre la vitre (3).

18. Dispositif selon l'une des revendications 8 à 17, **caractérisé en ce qu'**un récipient conçu comme cuve ouverte vers le haut (15) est disposé au-dessous de la paroi d'appui (1).

19. Dispositif selon la revendication 18, **caractérisé en ce qu'**une conduite (14) alimentée en eau est raccordée à la chambre.

20. Dispositif selon la revendication 19, **caractérisé en ce que** la conduite (14) part du récipient (15).

21. Dispositif selon les revendications 19 ou 20, **caractérisé en ce qu'**un filtre (17) est disposé dans la conduite (14).

22. Dispositif selon l'une des revendications 8 à 21, **caractérisé en ce que** la chambre (12) est entourée par un boîtier (40) en matériau insonorisant.

23. Dispositif selon la revendication 22, **caractérisé en ce que** les parois du boîtier (40), qui sont essentiellement perpendiculaires à la vitre (3), s'étendent directement jusqu'à celle-ci, à l'exception de la paroi inférieure.
